# EUROPÄISCHE PATENTSCHRIFT

(11) **EP 1 441 113 B1**
(45) Veröffentlichungstag und Bekanntmachung des Hinweises auf die Patenterteilung: **16.11.2005**
(21) Anmeldenummer: 04000500.1
(22) Anmeldetag: 13.01.2004
(51) Int. Cl.: F01N 7/18, F16L 55/035, F16F 1/46

(54) **Frequenz- und dehnungsoptimierte Halteschlaufe**
Frequency and extension optimized suspension
Boucle de suspension optimisée en fréquence et en extensibilité

(30) Priorität: 16.01.2003 DE 10301370
(43) Veröffentlichungstag der Anmeldung: 28.07.2004
(73) Patentinhaber: WOCO AVS GmbH, 63628 Bad Soden-Salmünster (DE)
(72) Erfinder: Möller, Ralf, 36381 Schlüchtern (DE); Gromes, Martin, 63628 Bad-Soden-Salmünster (DE); Noll, Alexander, 36396 Steinau 2 (DE); Kolb, Ralf, 36381 Schlüchtern-Herolz (DE)
(74) Vertreter: Weber-Bruls, Dorothée

(56) Entgegenhaltungen:
- EP-A- 0 670 233
- DE-A- 4 309 952
- FR-A- 2 674 800
- US-A- 5 271 595
- US-B1- 6 170 782

## Beschreibung

Die vorliegende Erfindung betrifft eine Vorrichtung zum Befestigen eines vibrationsbeaufschlagten zweiten Bauteils an einem ersten Bauteil nach dem Oberbegriff von Patentanspruch 1.

Aus dem Stand der Technik sind verschiedene Vorrichtungen bekannt, die dazu dienen, vibrationsbeaufschlagte Bauteile eines Kraftfahrzeugs, insbesondere Teile einer Abgasanlage, an der Karosserie des Kraftfahrzeugs zu befestigen. Diese sollten so ausgelegt sein, daß die Vibrationen des Bauteils nicht an die Karosserie weitergegeben werden.

So offenbart beispielsweise die DE 37 37 987 A1 eine Aufhängeöse für eine Abgasanlage eines Kraftfahrzeugs. Diese Aufhängeöse weist einen Schlaufenkörper aus Elastomerwerkstoff auf, in den zwei Buchsen eingebettet sind. Die eine Buchse dient der Aufnahme eines an der Karosserie befestigten Aufhängehakens, während der anderen Buchse der Aufnahme eines an Teilen der Abgasanlage befestigten Aufhängehakens dient. Durch diese Aufhängeöse sollen die miteinander verbundenen Körper gegen Körperschall isoliert und die Abgasanlage begrenzt federnd nachgiebig aufgehängt werden. Innerhalb des Schlaufenkörpers ist eine elastisch verformbare Einlage vorgesehen, die eine zumindest rhombusähnliche Ausgangsform besitzt. Durch die Einlage soll eine progressive Kennlinie der Aufhängeöse bei Auslenkungen erreicht werden, ohne daß es jedoch zu einem mechanisch wirkenden Anschlag bei einer maximalen Auslenkung kommt.

Darüber hinaus offenbart die DE 295 06 970 U1 eine Vorrichtung zur Aufhängung einer Abgasanlage eines Kraftfahrzeuges. Diese Vorrichtung umfaßt einen Körper aus elastisch nachgiebigem Material, beispielsweise aus Silikonkautschuk, der in zwei über Gurte bzw. Stege miteinander verbundenen Abschnitten Öffnungen zur Aufnahme von Aufhängeringen des Kraftfahrzeuges bzw. der Abgasanlage aufweist. In der Vorrichtung ist ein Längenbegrenzungselement vorgesehen, das jedoch im Gegensatz zu der in der DE 37 37 987 A1 offenbarten Aufhängeöse außerhalb des elastischen Körpers angeordnet ist. Dies soll dazu führen, daß die Federkennlinie der Vorrichtung in weiten Bereichen linear verläuft und erst dann einen progressiven Verlauf annimmt, wenn das Längenbegrenzungselement in Funktion tritt.

Die DE 43 09 952 A1 offenbart eine elastische Aufhängung für ein Auspuffrohr eines Kraftfahrzeuges, bei der ein einzuhängendes Bauteil möglichst einfach zu montieren sein soll. Das Bauteil wird dabei rechtwinklig zu seiner endgültigen Position in einen Einsatz eines Abschnitts der Aufhängung eingesteckt, wobei ein Finger des Bauteils in eine Nut des Einsatzes eingreift. Anschließend wird das Bauteil wieder in seine endgültige Position gedreht, aus der es sich nicht von alleine lösen kann.

Die US 6,170,782 B1 offenbart eine Aufhängung aus einem Elastomer für ein Fahrzeug, bei der ein erster Abschnitt mit einem zweiten Abschnitt über sich diagonal kreuzende Gurte verbunden ist. Dies soll den Vorteil haben, daß die Aufhängung in einer Seitenbewegung eine hohe Steifigkeit aufweist. Die Gurte können miteinander an ihren Kreuzungspunkten verbunden werden. Zusätzlich kann ein flexibler aber nicht dehnbarer Ring um die Aufhängung angebracht werden, um die Bewegung in eine Richtung senkrecht zur Seitenbewegung zu limitieren.

Die EP 0 670 233 A2 offenbart eine Aufhängung für bewegte Teile bei einem Fahrzeug, die über einen ersten Abschnitt und einen zweiten Abschnitt verfügt, wobei der zweite Abschnitt über ein erstes Federelement mit dem ersten Abschnitt verbunden ist. Das erste Federelement umfaßt, nämlich ein weicheres Gummi- oder Kunststofjznaterial in Vergleich zu dem Material des ersten Abschnitts. Außerhalb des ersten Federelements ist ein zweites äußeres Federelement aus dem selben harten Gummi- oder Kunststoffmaterial wie der erste Abschnitt angeordnet. Dies soll dazu führen, daß bei kleinen Schwingungen das erste, innere Federelement mit einer geringen Steifigkeit beansprucht wird, und bei Schwingungen mit einer großen Amplitude das innere Federelement mit dem zweiten Abschnitt auf dem äußeren Federelement aufliegt.

Die US 5,271,595 offenbart eine Aufhängung, die über einen ersten Abschnitt und einen zweiten Abschnitt aufweist, die über Gurte miteinander verbunden sind, wobei die beiden Gurte in der Mitte miteinander über einen horizontalen Querarm verbunden sind, in den eine Feder integriert ist, so daß eine zusätzliche Stabilität erreicht wird. Bei einer Zugbelastung wird der Querarm mit der Feder gebogen und kann an einem Anschlagspunkt an einem der Abschnitte anliegen. In die Gurte kann noch eine zusätzliche, ringförmige Versteifung eingebaut werden.

Die FR 2 674 800 offenbart eine gattungsgemäße Aufhängung für eine Auspuffanlage eines Fahrzeugs mit einem ersten Abschnitt und einem zweiten Abschnitt, die über Gurte verbunden sind, wobei die Steifigkeit der Gurte geringer ist als die Steifigkeit des zweiten Abschnitts. Zusätzlich zu einer ersten Öffnung zur Befestigung eines zu dämpfenden Bauteils weist der zweite Abschnitt ein längliches Loch auf, in das ein erster Stift hineinragt, der mit einem zweiten Stift im ersten Abschnitt fest, verbunden und an einer Karosserie befestigt ist, und einen zu starken Ausschlag begrenzen soll. Dies soll zu einer idealen Federkennlinie führen, die eine geringe Steifigkeit bei geringen Ausschlägen und eine große Steifigkeit bei starken Ausschlägen verzeichnet. In die Aufhängung kann eine zusätzliche Verstärkung innerhalb des zweiten Abschnitts eingebaut werden.

Um zu erreichen, daß die aus dem Stand der Technik bekannten Halteschlaufen über die Lebensdauer des Kraftfahrzeugs haltbar sind, wird die Federrate der Schlaufen häufig so ausgelegt, daß die Längung der Schlaufe unter statischer Last 3,5 bis maximal 4 mm nicht übersteigt. Somit wird die minimale statische Federrate der Halteschlaufe in direkter Abhängigkeit zu der auftretenden statischen Last festgelegt. Dieser Forderung steht jedoch entgegen, daß die Halteschlaufe für eine ausreichende Schwingungsisolation eine niedrige dynamische Federrate aufweisen soll.

Im Betrieb der aus dem Stand der Technik bekannten Halteschlaufen kommt es aufgrund der dynamischen Beanspruchung zu einer Überschreitung der maximalen Längung der Schlaufe unter statischer Last, so daß ein unbefriedigendes Setzverhalten auftritt, d.h. daß das befestigte Bauteil sich nicht in der gewünschten Position befindet bzw. eine unzureichende Dauerhaltbarkeit auftritt. So kommt es bei dynamischer Beanspruchung der Halteschlaufen dazu, daß mehrere Halteschlaufen, an denen die gesamte Abgasanlage aufgehängt ist, unterschiedliche Längungen aufweisen, so daß es zu Verspannungen innerhalb der Abgasanlage kommen kann und somit Materialüberbeanspruchungen innerhalb der Abgasanlage auftreten können, was schlimmstenfalls zu einem unerwünschten Materialbruch innerhalb der Abgasanlage führen kann. Darüber hinaus kann es aufgrund der Längung der Halteschlaufen zu einem Absinken der Abgasanlage unterhalb eines bestimmten Niveaus kommen, so daß es während des Fahrbetriebs des Kraftfahrzeuges zu einem Aufsetzen der Abgasanlage auf einem Untergrund kommen kann. Eine derartig unterschiedliche Längung der Halteschlaufen führt ferner zu einer unzureichenden akustischen Entkopplung zwischen der Abgasanlage und der Karosserie, und es kann zu einer Überbeanspruchung einzelner Halteschlaufen kommen, die mit einer Fehlfunktion, insbesondere einem Reißen, einhergehen kann.

Aufgabe der vorliegenden Erfindung ist es daher, die gattungsgemäße Vorrichtung derart weiterzuentwickeln, daß die Nachteile des Stands der Technik überwunden werden. Insbesondere soll eine hohe Dauerhaltbarkeit der Vorrichtung erzielt werden, und die Vorrichtung soll gleichzeitig ein befriedigendes Langzeitsetzverhalten und Langzeitentkopplungsverhalten aufweisen unter gleichzeitig günstigem Material- und Kostenaufwand.

Diese Aufgabe wird erfindungsgemäß durch die kennzeichnenden Merkmale von Patentanspruch 1 gelöst.

Die Unteransprüche 2 bis 10 stellen bevorzugte Ausführungsformen dar.

Der Erfindung liegt somit die überraschende Erkenntnis zugrunde, daß durch eine geeignete geometrische Ausgestaltung der gattungsgemäßen Vorrichtung, die im Folgenden als Halteschlaufe bezeichnet wird, eine hohe Lebensdauer der Halteschlaufe und verbesserte Entkopplungseigenschaften erzielt werden können, während gleichzeitig ein gutes Langzeitsetzverhalten und eine befriedigende Schwingungsisolation zwischen dem vibrationsbeaufschlagten Bauteil und der Karosserie des Kraftfahrzeugs vorliegt, indem insbesondere Dehnungsspitzen im Elastomerkörper an zwei signifikanten Stellen reduziert werden. Zunächst kommt es zu einer Reduzierung von Dehnungsspitzen im Bereich eines ersten Abschnitts der Halteschlaufe, der zur Aufhängung der Halteschlaufe an der Karosserie des Kraftfahrzeugs dient. Darüber hinaus werden Dehnungsspitzen wirksam innerhalb von Gurten bzw. Streben der Halteschlaufen vermieden, die den ersten Abschnitt der Halteschlaufe mit einem zweiten Abschnitt der Halteschlaufe verbinden, der eine Öffnung zur Befestigung der Halteschlaufe an der Abgasanlage umfaßt.

Durch die erfindungsgemäßen Maßnahmen wird die Dehnung im Elastomerkörper bezogen auf die Länge des Bauteils deutlich reduziert. So wird vermieden, daß es zu unterschiedlichen Längungen mehrerer Halteschlaufen kommen kann, die Verspannungen innerhalb der Abgasanlage erzeugen und ferner zu einer Überbeanspruchung einzelner Halteschlaufen führen können. Diese Eigenschaften der Halteschlaufe bewirken, daß auch höhere statische Lasten bei verbesserten Entkopplungs- und Setzeigenschaften lebensdauerfest am Fahrzeug positioniert werden können. Dies positiven Eigenschaften der erfindungsgemäßen Halteschlaufe werden insbesondere durch folgende geometrische Ausgestaltungen erzielt:
1. Im Bereich der Öffnungen zur Aufnahme der Befestigungsvorrichtungen an der Karosserie bzw. der Abgasanlage wird eine Versteifung erreicht, wohingegen die Gurte vergleichsweise größere Elastizitäten aufweisen. Dies führt insbesondere dazu, daß es im Bereich der Gurte selbst annähernd zu einer eindimensionalen Beanspruchung kommt.
2. Im Bereich der Gurte kann eine hohe Tragfähigkeit an der Innenkante mit einer geringen Tragfähigkeit an der Außenkante der Gurte kombiniert werden, was zu einer Verteilung und somit zu einer Minderung der maximalen Dehnung im Gurtbereich führt.
3. Hochbeanspruchte Zonen fallen mit Zonen zusammen, die während eines Vulkanisationsprozesses bei der Herstellung eine besonders hohe Vemetzungsdichte erfahren. Insbesondere kann in diesen Zonen eine Vulkanisationsdichte von nahezu 100 % erzielt werden, während Bereiche mit einer geringeren Beanspruchung eine geringere Vulkanisationsdichte aufweisen können, ohne daß es zu Fehlfunktionen der Halteschlaufe kommt. Dies führt vor allem zu deutlichen Vorteilen im Bezug auf das Setzverhalten und die Lebensdauer der Halteschlaufe.
4. Im Bereich der Öffnungen werden maximale Dehnungen zur Aufnahme der Befestigungsvorrichtungen auf einen großen Volumenbereich verteilt, was eine Überbeanspruchung dieser Bereiche und eine Fehlfunktion, die damit einhergehen könnte, vermeidet.
5. Darüber hinaus werden durch das Verhältnis der Länge der Gurte relativ zur Dicke des Elastomerkörpers im Bereich der Aufhängeöffnungen Federwege erzielt, die eine ausreichende Steifigkeit bereitstellen, bei gleichzeitig reduzierter Masse. Dies führt insbesondere dazu, daß die Eigenfrequenzen der Halteschlaufe in einen vorteilhaften Bereich verschoben werden, wodurch die elastischen Entkopplungseigenschaften der Halteschlaufe verbessert sowie die Herstellungskosten derselben reduziert werden.

Weitere Merkmale und Vorteile der Erfindung ergeben sich aus der nachstehenden Beschreibung, in der eine bevorzugte Ausführungsform der Erfindung beispielhaft anhand schematischer Zeichnungen im Einzelnen erläutert ist. Dabei zeigt:
- Figur 1: eine erste Seitenansicht einer erfindungsgemäßen Halteschlaufe;
- Figur 2: eine zweite Seitenansicht der Halteschlaufe der Figur 1, aus Richtung A der Figur 1; und
- Figur 3: eine Querschnittsansicht der Halteschlaufe der Figuren 1 und 2 entlang der Ebene B in Figur 1.

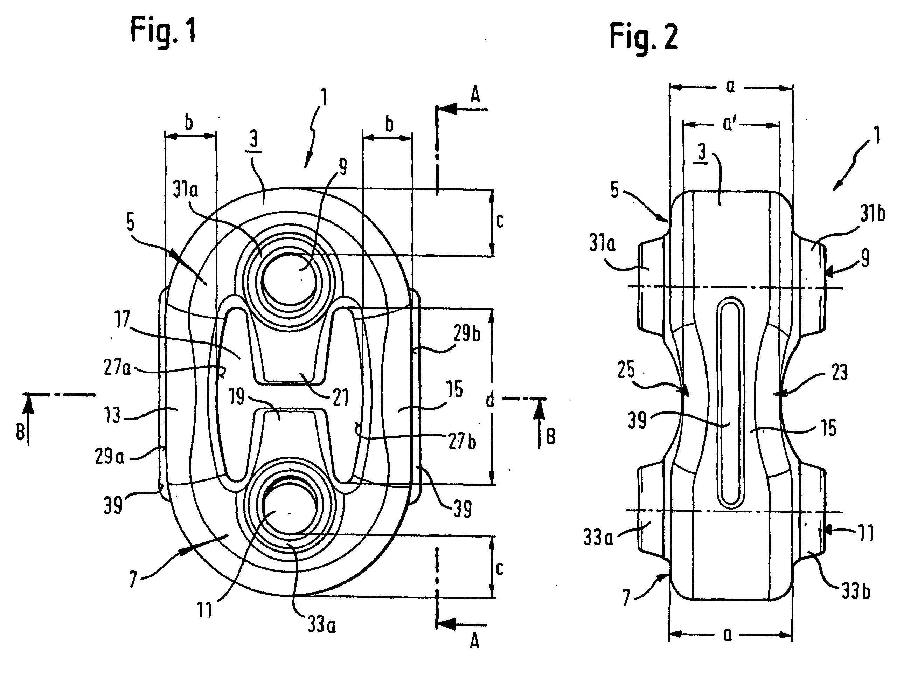

Die Figuren 1 bis 3 zeigen jeweils eine Halteschlaufe 1 zur Befestigung eines vibrationsbeaufschlagten Bauteils eines Kraftfahrzeugs (nicht dargestellt), insbesondere einer Abgasanlage, an der Karosserie des Kraftfahrzeugs (nicht dargestellt). Die Halteschlaufe 1 umfaßt im Wesentlichen einen Elastomerkörper 3, der zwei Abschnitte 5 und 7 umfaßt. Der eine Abschnitt 5 weist eine Öffnung 9 zur Aufnahme eines mit der Karosserie des Kraftfahrzeugs verbundenen Bolzens (nicht dargestellt) auf. Der andere Abschnitt 7 weist eine Öffnung 11 auf, die zur Aufnahme eines Bolzens (nicht dargestellt) dient, der mit der Abgasanlage verbunden ist. Die Abschnitte 5 und 7 sind über Gurte 13 und 15 des Elastomerkörpers 3 miteinander verbunden. Der Elastomerkörper 3 weist zwischen den Gurten 13, 15 einen im Wesentlichen doppel-T-förmigen bzw. hantelförmigen Hohlraum 17 auf. Die hantelförmige Ausgestaltung des Hohlraums 17 wird insbesondere durch zwei Anschläge 19 und 21 begrenzt, die verhindern, daß es zu einem Anschlagen der in den Öffnungen 9 und 11 befindlichen Bolzen während einer dynamischen Beanspruchung der Halteschlaufe 1 kommen kann.

Die erfindungsgemäße Halteschlaufe 1 ist dadurch gekennzeichnet, daß der Elastomerkörper 3 aufgrund seiner geometrischen Ausgestaltung im Bereich der Abschnitte 5 und 7 eine größere Steifigkeit als im Bereich der die Abschnitte 5 und 7 verbindenden Gurte 13 und 15 aufweist. Es ist zu verstehen, daß der Elastomerkörper 3 selbstverständlich aus verschiedenen elastischen Materialien bestehen kann, um diesen Effekt der geometrischen Ausgestaltung des Elastomerkörpers 3 zu unterstützen, jedoch ist dies nicht zwingend notwendig. Diese geometrische Ausgestaltung der Halteschlaufe 1 führt nun, wie nachfolgend beschrieben wird, dazu, daß die Halteschlaufe 1 eine hohe Lebensdauer gepaart mit einem vorteilhaften Setzverhalten aufweist.

Wie insbesondere aus Figur 2 ersichtlich, weist der Elastomerkörper 3 im Bereich der Abschnitte 5 und 7 eine Tiefe a auf. Im Vergleich dazu weisen die Gurte 13, 15 eine Tiefe a' auf, die geringer ist als die Tiefe a ist. Diese geringere Tiefe a' wird dadurch erreicht, daß die Gurte 13, 15 im Vergleich zu den Abschnitten 5 und 7 linsenförmige bzw. konkave Aussparungen 23, 25 aufweisen, die jeweils einen gegensinnigen Radius aufweisen. Mit der geringen Tiefe a' weisen die Gurte 13, 15 gleichzeitig eine höhere Flexibilität als die Bereiche 5 und 7 auf. Ferner wird durch die geometrische Ausgestaltung der Gurte 13, 15 erreicht, daß im Bereich der Gurte 13, 15 eine reduzierte Masse vorliegt, die mit einer erhöhten Eigenfrequenz ω einhergeht, die im Wesentlichen umgekehrt proportional zur Wurzel der Masse ist. Darüber hinaus weisen die Gurte 13, 15 eine nicht konstante Breite b über ihren Verlauf auf. Dies wird dadurch erreicht, daß Innenkanten 27a, 27b der Gurte 13, 15 einen unterschiedlichen Krümmungsradius im Vergleich zu Außenkanten 29a, 29b derselben aufweisen. Durch eine Taillierung der Gurte 13, 15 im Vergleich zu den Abschnitten 5, 7 des Elastomerkörpers 3 werden somit die elastischen Eigenschaften der Halteschlaufe 1 eingestellt.

Wie insbesondere Figur 1 zu entnehmen ist, weist der Elastomerkörper 3 im Bereich des Abschnitts 5 bzw. 7, in dem sich die Öffnung 9 bzw. 11 befindet, eine Dicke c auf. Die Dicke c ist größer als die Breite b der Gurte 13 bzw. 15, so daß eine Last im Bereich der Abschnitte 5, 7 über eine größere Querschnittsfläche als im Bereich der Gurte 13, 15 verteilt ist. Bei einer Belastung der Halteschlaufe 1 kommt es daher zu einer größeren Deformation in den Gurten 13, 15 als in den Abschnitten 5 und 7. Somit werden die Beanspruchungen des Elastomerkörpers 3 im Bereich der Abschnitte 5 und 7 deutlich reduziert, was zu einer erhöhten Lebensdauer der Halteschlaufe 1 führt.

Um eine Fehlfunktion der Halteschlaufe 1, insbesondere im Bereich der Öffnungen 9 und 11 zur Aufnahme der Bolzen zu vermeiden, weist der Elastomerkörper 3 in diesen Bereichen eine besondere Ausgestaltung auf. In den Bereichen der Öffnungen 9 und 11 weist der Elastomerkörper nämlich kegel- bzw. zylinderförmige Fortsätze 31a,31b sowie 33a, 33b auf. Diese Fortsätze 31a, 31b bzw. 33a, 33b bewirken, daß die über die Bolzen auf die Halteschlaufe 1 übertragenen Kräfte gleichmäßig im Bereich der Öffnungen 9 und 11 verteilt werden. Durch die Fortsätze 31a, 31b bzw. 33a, 33b kommt es zu einer deutlichen Reduzierung der Randeffekte im Bereich der Öffnungen 9 und 11, die insbesondere aufgrund einer dort wirkenden Kerbspannung zu einem Reißen des Elastomerkörpers 3 führen könnte. Dies ergibt eine deutliche Reduzierung des Risikos einer Fehlfunktion der Halteschlaufe 1 und somit eine Erhöhung der Lebensdauer der erfindungsgemäßen Halteschlaufe 1. Es kann insbesondere auch vorgesehen sein, daß die Fortsätze 31a, 31b, 33a, 33b jeweils zur Anpassung an unterschiedliche, durch die Bolzen eingebrachte Kräfte geometrisch unterschiedlich ausgestaltet sind, insbesondere eine unterschiedliche Länge sowie unterschiedliche Dicken aufweisen.

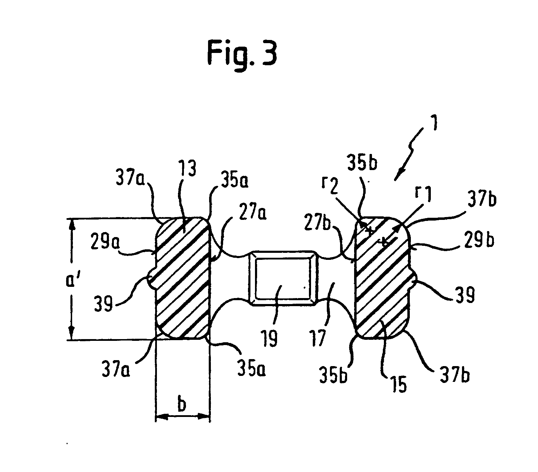

Wie insbesondere Figur 3 zu entnehmen ist, kommt es nicht nur durch das Profil entlang der Gurtlänge d der Gurte 13, 15 aufgrund der Aussparungen 23, 25 bzw. der unterschiedlichen Radien der Innenkanten 27a, 27b im Vergleich zu den Außenkanten 29a, 29b, zu einer Konzentration der elastischen Eigenschaften in der Halteschlaufe 1, sondern auch durch das Querschnittsprofil der Gurte 13, 15. Wie in Figur 3 gezeigt, weisen die Außenkanten 29a, 29b der Gurte 13, 15 jeweils Lichtkanten 37a bzw. 37b auf. Diese Lichtkanten weisen einen Krümmungsradius r₁ auf. Dagegen weisen die Innenkanten 27a, 27b Lichtkanten 35a, 35b, mit jeweils einem Krümmungsradius r₂ auf. Die beiden Krümmungsradien r₁ bzw. r₂ sind unterschiedlich groß, insbesondere ist der Radius r₁ in der in den Figuren dargestellten Ausführungsform der Halteschlaufe 1 größer als der Krümmungsradius r₂. Aufgrund der sich daraus ergebenden, unterschiedlichen Massenverhältnissen innerhalb der Gurte 13, 15 kommt es zu einer Verlagerung des Widerstandsschwerpunkts der Gurte 13, 15 in Richtung der Innenkanten 27a, 27b. Diese Verlagerung des Widerstandsschwerpunkts innerhalb der Gurte 13, 15 bewirkt einerseits, daß Bereiche innerhalb der Gurte 13, 15 ausgebildet werden, die eine hohe Tragfähigkeit an der Innenseite der Gurte 13, 15 mit einer geringen Tragfähigkeit an der Außenkontur der Gurte 13, 15 kombinieren. Darüber hinaus wird bewirkt, daß die Bereiche der Gurte 13, 15, die hoch beansprucht sind, relativ nahe an der Außenfläche der Gurte 13, 15 liegen, so daß es bei einem Vulkanisationsprozeß des Elastomerkörpers 3 zu einer im Wesentlichen vollständigen Vulkanisation des Elastomerkörpers 3 in diesem hoch beanspruchten Bereichen kommt, während die übrigen Bereiche zwar eine geringere Vulkanisationsdichte aufweisen können, dies jedoch nicht zu Fehlfunktionen führt, da diese Bereiche geringer beansprucht sind. Somit wird vermieden, daß zur Erreichung einer maximalen Tragfähigkeit einzelne Bereiche des Elastomerkörpers, wie aus dem Stand der Technik bekannt, übervulkanisiert werden müssen, was zu einer bedeutenden Reduzierung der Reißfestigkeit des Elastomerkörpers führen kann.

Somit weist die erfindungsgemäße Halteschlaufe 1 ein sehr positives Langzeitverhalten auf. Insbesondere wird vermieden, daß es zu Auslängungen der Halteschlaufe 1 kommen kann, was zu Verspannungen innerhalb der Abgasanlage und somit zu einem Reißen der Abgasanlage bzw. zu einem Absinken derselben führen kann. Darüber hinaus wird vermieden, daß die Auslenkung der Halteschlaufe 1 zu einer Reduzierung der Isolationseigenschaften, wie aus dem Stand der Technik bekannt, führen kann.

Schließlich kann insbesondere aus fertigungstechnischen Gründen vorgesehen sein, daß auf den Außenkanten 29a, 29b der Gurte 13, 15 Wülste 39 ausgebildet sind.

Die in der vorstehenden Beschreibung, in den Zeichnungen sowie in den Ansprüchen offenbarten Merkmale der Erfindung können sowohl einzeln, als auch in jeder beliebigen Kombination für die Verwirklichung der Erfindung in ihren verschiedenen Ausführungsformen wesentlich sein.

## Patentansprüche

1. Vorrichtung (1) zum Befestigen eines vibrationsbeaufschlagten zweiten Bauteils, insbesondere umfaßt von einer Abgasanlage eines Kraftfahrzeuges, an einem ersten Bauteil, insbesondere in Form der Karosserie des Kraftfahrzeuges, mit einem Elastomerkörper (3), der einen ersten Abschnitt (5) mit einer ersten Öffnung (9) zum Angreifen an das erste Bauteil oder ein damit verbundenes Befestigungsglied, einen zweiten Abschnitt (7) mit einer zweiten Öffnung (11) zum Angreifen an das zweite Bauteil oder ein damit verbundenes Befestigungsglied und zwei Gurte (13, 15) zur Verbindung der beiden Abschnitte (5, 7) umfaßt, wobei die Steifigkeit des ersten Abschnittes (5) sowie des zweiten Abschnittes (7) jeweils größer als die des ersten Gurtes (13) oder des zweiten Gurtes (15) zur Schwingungsisolation der beiden Bauteile ist, **dadurch gekennzeichnet, daß**
die Gurte (13, 15) zwischen den beiden Abschnitten (5, 7) zur Einstellung der elastischen Eigenschaften des Elastomerkörpers (3) tailliert sind, und die Gurte (13, 15) zur Variation der Breite b jeden Gurtes (13, 15) zwischen den beiden Abschnitten (5, 7) unterschiedliche Krümmungsradien an ihren voneinander abgewandten Außenkanten (29a, 29b) im Vergleich zu ihren zueinander gewandten Innenkanten (27a, 27b) aufweisen.

2. Vorrichtung nach Anspruch 1, **dadurch gekennzeichnet, daß**
eine an die Vorrichtung (1) angelegte Last im Bereich der Gurte (13, 15) von einer geringeren Querschnittsfläche als im Bereich der Abschnitte (5, 7) getragen wird.

3. Vorrichtung nach Anspruch 1 oder Anspruch 2, **dadurch gekennzeichnet, daß**
die Gurte (13, 15) zur Reduzierung der Tiefe a zwischen den beiden Abschnitten (5, 7) gegensinnige, im Wesentlichen linsenförmige Aussparungen (23, 25) an ihren voneinander abgewandten Außenkanten aufweisen, und/oder
der erste Abschnitt (5) im Bereich der ersten Öffnung (9) eine Dicke c aufweist, die im Wesentlichen der Dicke c des zweiten Abschnitts (7) im Bereich der zweiten Öffnung (11) entspricht, jedoch größer als die Breite b jedes Gurtes (13, 15) ist.

4. Vorrichtung nach einem der vorangehenden Ansprüche, **dadurch gekennzeichnet, daß** die Länge d jeden Gurtes (13, 15) zwischen den beiden Öffnungen (9, 11) größer als die Tiefe a' zwischen den beiden Abschnitten (5, 7) ist.

5. Vorrichtung nach einem der vorangehenden Ansprüche, **dadurch gekennzeichnet, daß** der Elastomerkörper (3) zwischen den beiden Abschnitten (5, 7) einen im Wesentlichen hantelförmigen Hohlraum (17), insbesondere zur Reduzierung der Breite b jeden Gurtes (13, 15), aufweist, die vorzugsweise begrenzt ist durch einen ersten Anschlag (19) zur ersten Öffnung (9) und einen zweiten Anschlag (21) zur zweiten Öffnung (11).

6. Vorrichtung nach einem der vorangehenden Ansprüche, **dadurch gekennzeichnet, daß** die Tiefe des ersten Abschnitts (5) im Bereich der ersten Öffnung (9) und die Tiefe des zweiten Abschnitts (7) im Bereich der zweiten Öffnung (11) erhöht sind, wobei vorzugsweise Fortsätze (31a, 31b, 33a, 33b) im Bereich der Öffnungen (9, 11) vorgesehen sind, insbesondere mit Kegel- oder Zylinderform.

7. Vorrichtung nach einem der vorangehenden Ansprüche, **dadurch gekennzeichnet, daß** die Außenkanten der Gurte (13, 15) Lichtkanten (37a, 39a) mit einem ersten Krümmungsradius r₁ und die Innenkanten der Gurte (13, 15) Lichtkanten (37b, 39b) mit einem zweiten Krümmungsradius r₂ aufweisen, wobei insbesondere der erste Krümmungsradius r₁ größer als der zweite Krümmungsradius r₂ ist, wodurch es zu einer Verlagerung des Widerstandsschwerpunktes der Gurte (13, 15) in Richtung der Innenkanten kommt.

8. Vorrichtung nach einem der vorangehenden Ansprüche, **dadurch gekennzeichnet, daß** auf den Außenkanten der Gurte (13, 15) jeweils zumindest ein Wulst (39) oder zumindest eine Ausnehmung ausgebildet sind.

9. Vorrichtung nach einem der vorangehenden Ansprüche, **dadurch gekennzeichnet, daß** der Elastomerkörper in einem Vulkanisationsprozeß mit einer hohen Vernetzungsdichte in Bereichen hoher Beanspruchung hergestellt ist.

10. Vorrichtung nach einem der vorangehenden Ansprüche, **dadurch gekennzeichnet, daß** der Elastomerkörper aus einem elastischen Material hergestellt ist, oder
für den ersten und zweiten Abschnitt ein erstes elastisches Material und den ersten und zweiten Gurt ein zweites elastisches Material ausgewählt ist.

## Claims

1. Device (1) for fixing a second component subject to vibrations, in particular comprising an exhaust system of a motor vehicle, to a first component, in particular in the form of the body of the motor vehicle, the device having an elastomer body (3) which comprises a first section (5) with a first opening (9) designed to grip onto the first component or a fixing element connected to it, a second section (7) with a second opening (11) designed to grip onto the second component or a fixing element connected to it, and two belts (13, 15) for connecting the two sections (5, 7), whereby the rigidity of the first section (5) and the second section (7) is greater than that of the first belt (13) or the second belt (15) in order to insulate the two components against vibration, **characterised in that** the belts (13, 15) between the two sections (5, 7) are shaped so as to adjust the elastic properties of the elastomer body (3), and, in order to vary the width b of each belt (13,15) between the two sections (5, 7), the belts (13, 15) possess different radii of curvature on their outer edges facing away from each other (29a, 29b) in comparison with their inner edges facing towards each other (27a, 27b).

2. Device according to claim 1, **characterised in that** a load applied to the device (1) in the area of the belts (13, 15) is borne by a smaller cross-sectional area than in the area of the sections (5, 7).

3. Device according to claim 1 or claim 2, **characterised in that**, in order to reduce the depth a between the two sections (5, 7)), the belts (13, 15) possess opposing, essentially lens-shaped cut-outs (23, 25) on their outer edges facing away from each other, and/or
The first section (5) has a thickness c in the area of the first opening (9) which essentially corresponds to the thickness c of the second section (7) in the area of the second opening (11), but is greater than the width b of each belt (13, 15).

4. Device according to one of the preceding claims, **characterised in that** the length d of each belt (13, 15) between the two openings (9, 11) is greater than the depth a' between the two sections (5, 7).

5. Device according to one of the preceding claims, **characterised in that** the elastomer body (3) possesses an essentially dumb-bell-shaped cavity (17) between the two sections (5, 7), in particular to reduce the width b of each belt (13, 15), which is preferably limited by a first stop (19) adjacent to the first opening (9) and a second stop (21) adjacent to the second opening (11).

6. Device according to one of the preceding claims, **characterised in that** the depth of the first section (5) in the area of the first opening (9) and the depth of the second section (7) in the area of the second opening (11) are increased, whereby projections (31a, 31b, 33a, 33b) are preferably provided in the area of the openings (9, 11), especially with a spherical or cylindrical form.

7. Device according to one of the preceding claims, **characterised in that** the outer edges of the belts (13, 15) possess rounded edges (37a, 39a) with a first radius of curvature r₁ and the inner edges of the belts (13, 15) possess rounded edges (37b, 39b) with a second radius of curvature r₂, whereby, in particular, the first radius of curvature r₁ is greater than the second radius of curvature r₂, which leads to a shifting of the centre of resistance of the belts (13, 15) in the direction of the inner edges.

8. Device according to one of the preceding claims, **characterised in that** at least one bead (39) or at least one cut-out is formed on the outer edge of each belt (13, 15).

9. Device according to one of the preceding claims, **characterised in that** the elastomer body is manufactured in a vulcanisation process with a high crosslinkage density in areas subjected to high stresses.

10. Device according to one of the preceding claims, **characterised in that** the elastomer body is manufactured of an elastic material, or a first elastic material is chosen for the first and second section and a second elastic material is chosen for the first and second belt.

## Revendications

1. Dispositif (1) pour la fixation d'un deuxième composant sollicité en vibration, en particulier composé d'une installation de gaz d'échappement d'un véhicule automobile, à un premier composant, en particulier ayant la forme de la carrosserie du véhicule automobile, avec un corps en élastomère (3), comprenant un premier tronçon (5) muni d'une première ouverture (9) pour emprise sur le premier composant ou un organe de fixation lui étant relié, un deuxième tronçon (7) avec une deuxième ouverture (11) pour emprise sur le deuxième composant ou un organe de fixation lui étant relié et deux courroies ou ceintures (13, 15) pour assurer la liaison des deux tronçons (5, 7), la rigidité du premier tronçon (5) ainsi que du deuxième tronçon (7) étant chaque fois supérieure à celle du premier tronçon (13) ou du deuxième tronçon (15) pour assurer l'isolation en vibrations des deux composants, **caractérisé en ce que** les ceintures ou courroies (13, 15), entre les deux tronçons (5, 7), sont conformées pour régler les propriétés élastiques du corps en élastomère (3), et les ceintures ou courroies (13, 15), devant assurer la variation de la largeur b de chaque ceinture ou courroie (13, 15) entre les deux tronçons (5, 7), présentant des rayons de courbure différents à leurs arêtes extérieures (29a, 29b) opposées l'une à l'autre par rapport à leurs arêtes intérieures (27a, 27b) tournées l'une vers l'autre.

2. Dispositif selon la revendication 1, **caractérisé en ce qu'**une charge, appliquée sur le dispositif (1) dans la zone des ceintures ou courroies (13, 15), est portée par une plus petite surface de section transversale que dans la zone des tronçons (5, 7).

3. Dispositif selon la revendication 1 ou la revendication 2, **caractérisé en ce que** les ceintures ou courroies (13, 15), pour réduire la profondeur a entre les deux tronçons (5, 7), présentent des évidements (23, 25) sensiblement lenticulaires, en sens opposé, sur leurs arêtes extérieures opposées les unes aux autres, et/ou le premier tronçon (5) présente dans la zone de la première ouverture (9) une épaisseur c, correspondant sensiblement à l'épaisseur c du deuxième tronçon (7) dans la zone de la deuxième ouverture (11), en étant cependant supérieure à la largeur b de chaque ceinture ou courroie (13, 15).

4. Dispositif selon l'une des revendications précédentes, **caractérisé en ce que** la longueur d de chaque ceinture ou courroie (13, 15) entre les deux ouvertures (9, 11) est supérieure à la profondeur a' entre les deux tronçons (5, 7).

5. Dispositif selon l'une des revendications précédentes, **caractérisé en ce que** le corps en élastomère (3) présente entre les deux tronçons (5, 7) un espace creux (17) sensiblement en forme d'haltère, en particulier, pour réduire la largeur b de chaque ceinture ou courroie (13, 15), de préférence limitée par une première butée (19) par rapport à la première ouverture (9) et par une deuxième butée (21) par rapport à la deuxième ouverture (11).

6. Dispositif selon l'une des revendications précédentes, **caractérisé en ce que** la profondeur du premier tronçon (5), dans la zone de la première ouverture (9), et la profondeur du deuxième tronçon (7), dans la zone de la deuxième ouverture (11), sont augmentées, sachant que, de préférence, des prolongements (31a, 31b, 33a, 33b), en particulier avec une forme conique ou cylindrique, sont prévus dans la zone des ouvertures (9, 11).

7. Dispositif selon l'une des revendications précédentes, **caractérisé en ce que** les arêtes extérieures des ceintures ou courroies (13, 15) présentent des arêtes exposées (37a, 39a) ayant un premier rayon de courbure r₁ et les arêtes intérieures des ceintures ou courroies (13, 15) présentent des arêtes exposées (37b, 39b) ayant un deuxième rayon de courbure r₂, sachant que, en particulier, le premier rayon de courbure r₁ est supérieur au deuxième rayon de courbure r₂, faisant qu'il est produit, dans la direction des arêtes intérieures, un déplacement du centre de gravité de résistance des ceintures ou courroies (13, 15).

8. Dispositif selon l'une des revendications précédentes, **caractérisé en ce que**, sur chacune des arêtes extérieures des ceintures ou courroies (13, 15), sont réalisés au moins un bourrelet (39) ou au moins un évidement.

9. Dispositif selon l'une des revendications précédentes, **caractérisé en ce que** le corps en élastomère est fabriqué en un processus de vulcanisation, avec une densité de réticulation supérieure dans les zones où la sollicitation est élevée.

10. Dispositif selon l'une des revendications précédentes, **caractérisé en ce que** le corps en élastomère est fabriqué à partir d'un matériau élastique, ou bien un premier matériau élastique tronçons est sélectionné pour le premier et le deuxième et un deuxième matériau élastique est sélectionné pour la première et la deuxième ceintures ou courroies.
